# EUROPÄISCHE PATENTSCHRIFT

(11) **EP 0 981 681 B1**
(45) Veröffentlichungstag und Bekanntmachung des Hinweises auf die Patenterteilung: **20.02.2002**
(21) Anmeldenummer: 98933426.3
(22) Anmeldetag: 30.04.1998
(51) Int. Cl.: F01K 23/10, F02C 7/18

(54) **GAS- UND DAMPFTURBINENANLAGE UND VERFAHREN ZUR KÜHLUNG DES KÜHLMITTELS DER GASTURBINE EINER DERARTIGEN ANLAGE**
GAS AND STEAM TURBINE SYSTEM, AND REFRIGERATION OF THE COOLANT INTENDED FOR THE GAS TURBINE IN SUCH A SYSTEM
SYSTEME DE TURBINES A GAZ ET A VAPEUR ET PROCEDE DE REFROIDISSEMENT DE L'AGENT REFRIGERANT DE LA TURBINE A GAZ D'UN TEL SYSTEME

(30) Priorität: 16.05.1997 DE 19720654
(43) Veröffentlichungstag der Anmeldung: 01.03.2000
(73) Patentinhaber: SIEMENS AKTIENGESELLSCHAFT, 80333 München (DE)
(72) Erfinder: THIEL, Hans-Joachim, D-91056 Erlangen (DE); GEBKE, Klaus, D-63561 Gelnhausen (DE); GREIS, Thomas, D-64285 Darmstadt (DE); REICHARD, Alfred, D-91058 Erlangen (DE)
(86) Internationale Anmeldenummer: DE9801200
(87) Internationale Veröffentlichungsnummer: WO9853184

(56) Entgegenhaltungen:
- EP-A- 0 709 561
- DE-C- 4 333 439
- PATENT ABSTRACTS OF JAPAN vol. 018, no. 660 (M-1722), 14. Dezember 1994 & JP 06 257413 A (FUJI ELECTRIC CO LTD), 13. September 1994
- PATENT ABSTRACTS OF JAPAN vol. 096, no. 005, 31. Mai 1996 & JP 08 021207 A (MITSUBISHI HEAVY IND LTD), 23. Januar 1996

## Beschreibung

Die Erfindung bezieht sich auf eine Gas- und Dampfturbinenanlage mit einem einer Gasturbine rauchgasseitig nachgeschalteten Abhitzedampferzeuger, dessen Heizflächen in den Wasser-Dampf-Kreislauf einer Dampfturbine geschaltet sind. Sie betrifft weiter ein Verfahren zur Kühlung des Kühlmittels der Gasturbine einer derartigen Gas- und Dampfturbinenanlage.

Bei einer Gas- und Dampfturbinenanlage wird die im entspannten Arbeitsmittel (Rauchgas) aus der Gasturbine enthaltene Wärme zur Erzeugung von Dampf für die Dampfturbine genutzt. Die Wärmeübertragung erfolgt in einem der Gasturbine rauchgasseitig nachgeschalteten Abhitzedampferzeuger, in dem Heizflächen in Form von Rohren oder Rohrbündeln angeordnet sind. Diese wiederum sind in den Wasser-Dampf-Kreislauf der Dampfturbine geschaltet. Der Wasser-Dampf-Kreislauf umfaßt üblicherweise mehrere, beispielsweise zwei, Druckstufen, wobei jede Druckstufe eine Vorwärm- und eine Verdampferheizfläche aufweist.

In einem als Naturumlauf bezeichneten Verdampferkreislauf erfolgt eine teilweise Verdampfung des geführten Arbeitsmediums im Verdampfer, wobei ein Umlauf des Arbeitsmediums durch sich beim Verdampfungsprozeß einstellende Druckdifferenzen und/oder durch die geodätische Anordnung von Verdampfer und Dampftrommel gewährleistet ist. Alternativ kann der Verdampferkreislauf auch ein Zwangumlauf sein, bei dem der Umlauf des Arbeitsmediums durch eine Umwälzpumpe gewährleistet ist, wobei das Arbeitsmedium im Verdampfer ebenfalls mindestens teilweise verdampft. Sowohl beim Naturumlauf als auch beim Zwangsumlauf wird das Wasser-Dampf-Gemisch aus dem Verdampfer einer in den Verdampferkreislauf geschalteten Dampftrommel zugeführt. In der Dampftrommel werden Wasser und Dampf separiert, wobei das Wasser von der Dampftrommel erneut dem Verdampfer zugeführt wird.

Bei einem als Zwangsdurchlaufdampferzeuger ausgelegten Verdampferkreislauf kann alternativ auch eine vollständige Verdampfung des Arbeitsmediums in einem Durchgang durch den Verdampfer mit anschließender Teilüberhitzung vorgesehen sein. Dabei ist der Durchlauf des Arbeitsmediums durch den Verdampfer ebenfalls durch Pumpen gewährleistet.

Unabhängig davon, ob in der Dampfturbinenanlage das Naturumlauf-, das Zwangumlauf- oder das Zwangsdurchlaufprinzip Anwendung findet, wird zur Steigerung der Leistungsfähigkeit der Gasturbine und damit zur Erzielung eines möglichst hohen Wirkungsgrades einer derartigen Gas- und Dampfturbinenanlage eine besonders hohe Temperatur des Rauchgases am Eintritt der Gasturbine von z.B. 1.000 bis 1.200°C angestrebt. Eine derartig hohe Turbineneintrittstemperatur bringt allerdings Werkstoffprobleme mit sich, insbesondere in bezug auf die Hitzebeständigkeit der Turbinenschaufeln.

Eine Steigerung der Turbineneintrittstemperatur kann dann zugelassen werden, wenn die Turbinenschaufeln soweit gekühlt werden, daß sie stets eine unterhalb der zulässigen Werkstofftemperatur liegende Temperatur aufweisen. Dazu ist es aus der EP-PS 0 379 880 bekannt, einen Teilstrom von aus einem der Gasturbine zugeordneten Kompressor abströmender verdichteter Luft abzuzweigen und diesen Teilstrom der Gasturbine als Kühlmittel zuzuführen. Die als Kühlmittel dienende Luft wird vor Eintritt in die Gasturbine gekühlt. Der Kühlluft bei der Kühlung entzogene Wärme wird dabei als Verdampfungswärme genutzt und zum Antrieb der Dampfturbine verwendet. Als Verdampfersystem ist ein Entspannungsverdampfer mit einer Umwälzpumpe und einem Entspannungsgefäß eingesetzt. Dabei wird der Dampftrommel des Verdampferkreislaufs Wasser entnommen, das durch einen Wärmetausch mit der als Kühlmittel für die Gasturbine dienenden Kühlluft aufgeheizt und anschließend durch Entspannung im Entspannungsgefäß verdampft wird. Der somit entstandene Dampf wird der Dampfturbine zugeführt.

Eine derartige Vorrichtung zur Kühlung der Kühlluft einer Gasturbine ist für eine bestimmte Temperaturdifferenz zwischen dem der Dampftrommel entnommenen Wasser und der Kühlluft ausgelegt. Für eine zuverlässige Kühlung der Gasturbine ist dabei der Betrieb des gesamten Abhitzedampferzeugers erforderlich. Eine derartige Gas- und Dampfturbinenanlage ist somit nur bedingt flexibel einsetzbar.

Aus der DE 43 33 439 C1 ist eine Gas- und Dampfturbinenanlage bekannt, bei der zur Kühlung der Kühlluft der Gasturbine ein Zwischenkreis vorgesehen ist, der in der Kühlluft geführte Wärme auf den der Dampfturbine zugeordneten Wasser-Dampf-Kreislauf überträgt. Eine besonders wirkungsvolle Kühlung der Kühlluft ist bei dieser Vorrichtung jedoch von der Betriebsbereitschaft der Dampfturbine abhängig, so daß diese Anlage nur bedingt flexibel einsetzbar ist.

Der Erfindung liegt daher die Aufgabe zugrunde, eine Gas- und Dampfturbinenanlage der obengenannten Art anzugeben, bei der auch unter verschiedenartigen Betriebsbedingungen eine zuverlässige Kühlung der Gasturbine gewährleistet ist. Zudem soll ein für verschiedenartige Betriebsbedingungen dazu besonders geeignetes Verfahren zur Kühlung des Kühlmittels einer Gasturbine einer Gas- und Dampfturbinenanlage angegeben werden.

Diese Aufgabe wird für eine Gas- und Dampfturbinenanlage der obengenannten Art erfindungsgemäß gelöst, indem ein zur Kühlung des Kühlmittels der Gasturbine vorgesehener Wärmetauscher sekundärseitig in einen mit dem Wasser-Dampf-Kreislauf der Dampfturbine absperrbar verbundenen separaten Wasser-Dampf-Kreislauf geschaltet ist.

Die Erfindung geht von der Überlegung aus, daß bei einer besonders flexibel einsetzbaren Gas- und Dampfturbinenanlage die Gasturbine unabhängig vom Abhitzedampferzeuger und somit auch unabhängig von der Dampfturbine betreibbar sein sollte. Auch beim Solobetrieb der Gasturbine sollte eine zuverlässige Kühlung ihrer Turbinenschaufeln gewährleistet sein. Dazu ist zur Kühlung des Kühlmittels der Gasturbine ein von dem Wasser-Dampf-Kreislauf der Dampfturbine unabhängiges Kühlsystem vorgesehen.

Vorzugsweise ist der Wärmetauscher als Verdampfer für den separaten Wasser-Dampf-Kreislauf ausgebildet. Im Normalbetrieb der Gas- und Dampfturbinenanlage ist der im separaten Wasser-Dampf-Kreislauf gewonnene Dampf dabei zweckmäßigerweise dem Wasser-Dampf-Kreislauf der Dampfturbine zuführbar.

Zur Abscheidung des Dampfes aus dem aus dem Wärmetauscher abströmenden Wasser-Dampf-Gemisch ist in den separaten Wasser-Dampf-Kreislauf zweckmäßigerweise eine Dampftrommel geschaltet. Diese Dampftrommel weist zweckmäßigerweise einen integrierten Kondensator auf.

Für eine besonders günstige Rückgewinnung der dem Kühlmittel der Kühlung entzogenen Wärme ist an die in den separaten Wasser-Dampf-Kreislauf geschaltete Dampftrommel vorzugsweise eine absperrbare Dampfleitung angeschlossen, über die der im separaten Wasser-Dampf-Kreislauf erzeugte Dampf in eine in den Wasser-Dampf-Kreislauf der Dampfturbine geschaltete Dampftrommel einspeisbar ist.

Der separate Wasser-Dampf-Kreislauf ist für eine besonders einfache Bauweise und für einen besonders geringen Montage- und Installationsaufwand zweckmäßigerweise im Naturumlauf betreibbar.

Zur zuverlässigen Abfuhr der der Kühlluft bei ihrer Kühlung entzogenen Wärme auch im Solobetrieb der Gasturbine ist die in den separaten Wasser-Dampf-Kreislauf geschaltete Dampftrommel vorteilhafterweise an einen Sekundärkühlkreislauf angeschlossen. Der Sekundärkühlkreislauf kann dabei beispielsweise einen Kühlturm umfassen.

Bezüglich des Verfahrens zur Kühlung des Kühlmittels einer Gasturbine einer Gas- und Dampfturbinenanlage wird die genannte Aufgabe gelöst, indem das Kühlmittel durch Wärmetausch mit einem in einem von der Dampfturbine unabhängigen Wasser-Dampf-Kreislauf geführten Medium gekühlt wird.

Das im unabhängigen Wasser-Dampf-Kreislauf geführte Medium wird zweckmäßigerweise beim Wärmetausch mit dem Kühlmittel mindestens teilweise verdampft. Der unabhängige Wasser-Dampf-Kreislauf wird vorteilhafterweise im Naturumlauf betrieben.

Die mit der Erfindung erzielten Vorteile bestehen insbesondere darin, daß durch die Kühlung des Kühlmittels der Gasturbine durch Wärmetausch mit einem in einem von der Dampfturbine unabhängigen Wasser-Dampf-Kreislauf geführten Medium eine zuverlässige Kühlung der Gasturbine unabhängig vom Betriebszustand der Dampfturbine gewährleistet ist. Die Gasturbine ist somit auch bei verschiedenartigen Betriebszuständen der Gas- und Dampfturbinenanlage, insbesondere auch im Solobetrieb, sicher betreibbar. Durch die absperrbare Verbindung des separaten Wasser-Dampf-Kreislaufs mit dem Wasser-Dampf-Kreislauf der Dampfturbine ist zudem beim Normalbetrieb der Gas- und Dampfturbinenanlage eine Rückführung der der Kühlluft der Gasturbine bei ihrer Kühlung entzogenen Wärme in den Energieerzeugungsprozeß möglich. Die Gas- und Dampfturbinenanlage ist somit im Normalbetrieb besonders wirtschaftlich betreibbar.

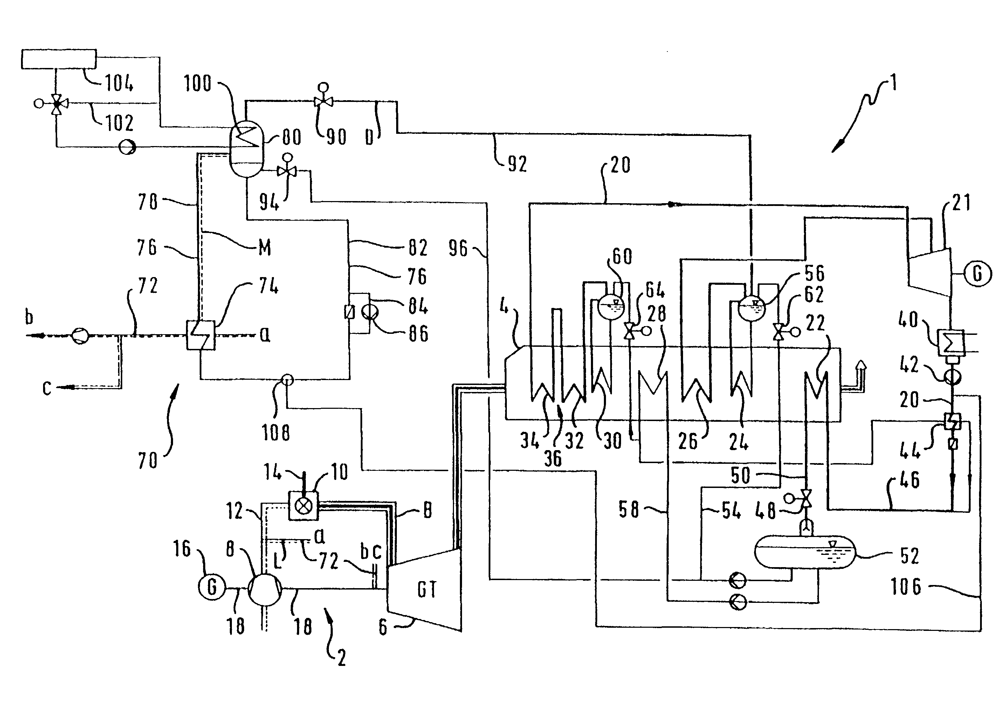

Ein Ausführungsbeispiel der Erfindung wird anhand einer Zeichnung näher erläutert. Darin zeigt die Figur schematisch eine Gas- und Dampfturbinenanlage mit einem Kühlsystem zur Kühlung des Kühlmittels für die Gasturbine.

Die in der Figur schematisch dargestellte Gas- und Dampfturbinenanlage 1 umfaßt eine Gasturbinenanlage 2 mit rauchgasseitig nachgeschaltetem Abhitzedampferzeuger 4. Die Gasturbinenanlage 2 umfaßt eine Gasturbine 6 mit angekoppeltem Luftverdichter 8. Der Gasturbine 6 ist eine Brennkammer 10 vorgeschaltet, die an eine Frischluftleitung 12 des Luftverdichters 8 angeschlossen ist. In die Brennkammer 10 der Gasturbine 6 mündet eine Brennstoffleitung 14. Die Gasturbine 6 und der Luftverdichter 8 sowie ein Generator 16 sitzen auf einer gemeinsamen Welle 18.

Der der Gasturbine 6 der Gasturbinenanlage 2 rauchgasseitig nachgeschaltete Abhitzedampferzeuger 4 weist eine Anzahl von Heizflächen auf, die in einen Wasser-Dampf-Kreislauf 20 einer Dampfturbine 21 geschaltet sind. Die Heizflächen sind dabei ein Kondensatvorwärmer 22, ein Niederdruckverdampfer 24, ein Niederdrucküberhitzer 26, ein Hochdruckvorwärmer 28, ein Hochdruckverdampfer 30 sowie ein aus zwei Teilstücken 32, 34 gebildeter Hochdrucküberhitzer 36.

Der Dampfturbine 21 ist dampfseitig ein Kondensator 40 nachgeschaltet, der über eine Kondensatpumpe 42 und über einen außerhalb des Abhitzedampferzeugers 4 angeordneten Vorwärmer 44 sowie über eine Kondensatzuführung 46 mit dem Kondensatvorwärmer 22 verbunden ist. Dieser ist ausgangsseitig über eine mit einem Regelventil 48 absperrbare Zuleitung 50 an einen Speisewasserbehälter 52 angeschlossen. Am Speisewasserbehälter 52 ist ausgangsseitig eine Zuleitung 54 zur Zuführung von Speisewasser in eine an den Niederdruckverdampfer 24 angeschlossene Dampftrommel 56 angeordnet. Weiterhin ist der Speisewasserbehälter 52 ausgangsseitig über eine Zuleitung 58 mit dem Hochdruckvorwärmer 28 verbunden, der seinerseits ausgangsseitig an eine an den Hochdruckverdampfer 30 angeschlossene Dampftrommel 60 angeschlossen ist. Die Zuleitungen 54, 58 sind jeweils mit einem Regelventil 62 bzw. 64 absperrbar.

Die Dampftrommeln 56 und 60 sind über den Niederdrucküberhitzer 26 bzw. über den Hochdrucküberhitzer 36 an einen Niederdruckteil bzw. an einen Hochdruckteil der Dampfturbine 21 angeschlossen, so daß ein geschlossener Wasser-Dampf-Kreislauf 20 entsteht.

Die Gasturbinenanlage 2 ist zur Erzielung eines besonders hohen Wirkungsgrades ausgelegt. Dazu ist beim Betrieb der Gasturbinenanlage 2 der Eintritt von Rauchgas B mit einer Temperatur von etwa 1.000 bis 1.200°C in die Gasturbine 6 vorgesehen. Um dabei Werkstoffprobleme insbesondere bei der Hitzebeständigkeit der Turbinenschaufeln der Gasturbine 6 sicher zu vermeiden, ist der Gasturbinenanlagen 2 ein Kühlsystem 70 zugeordnet.

Als Kühlmittel für die Gasturbine 6 ist dabei aus dem Luftverdichter 8 stammende Luft L vorgesehen, die der Gasturbine 6 über eine von der Frischluftleitung 12 abzweigende Kühlmittelleitung 72 unter Umgehung der Brennkammer 10 direkt zuführbar ist. Zur Kühlung der als Kühlmittel vorgesehenen Luft L umfaßt das Kühlsystem 70 einen primärseitig in die Kühlmittelleitung 72 geschalteten Wärmetauscher 74.

Der Wärmetauscher 74 ist sekundärseitig in einen von dem Wasser-Dampf-Kreislauf 20 der Dampfturbine 21 unabhängigen separaten Wasser-Dampf-Kreislauf 76 geschaltet. Dazu ist der Wärmetauscher 74 als Verdampfer für ein im separaten Wasser-Dampf-Kreislauf 76 umlaufendes Medium M ausgelegt und ausgangsseitig über eine Wasser-Dampf-Leitung 78 an einen Dampftrommel 80 mit integriertem Kondensator angeschlossen. Die Dampftrommel 80 ist über eine Kondensatleitung 82 mit dem Wärmetauscher 74 verbunden. Der separate Wasser-Dampf-Kreislauf 76 ist dabei für einen Naturumlauf ausgelegt. Lediglich für eine Anfahrphase ist eine in eine Umführungsschleife 84 der Kondensatleitung 82 geschaltete Umwälzpumpe 86 vorgesehen.

Der separate Wasser-Dampf-Kreislauf 76 ist mit dem Wasser-Dampf-Kreislauf 20 der Dampfturbine 21 absperrbar verbunden. Dazu ist die Dampftrommel 80 über eine mit einem Ventil 90 absperrbare Dampfleitung 92 an die als Niederdrucktrommel ausgelegte Dampftrommel 56 angeschlossen. Wasserseitig ist die Dampftrommel 80 über eine mit einem Regelventil 94 absperrbare Leitung 96 an die Zuführungsleitung 54 angeschlossen.

In der Dampftrommel 80 ist ein Wärmetauscher 100 angeordnet, der an einen Sekundärkühlkreislauf 102 angeschlossen ist. In den Sekundärkühlkreislauf 102 ist ein Kühlturm 104 geschaltet.

Die Gas- und Dampfturbinenanlage 1 ist derart ausgelegt, daß ein zuverlässiger Betrieb mit sicherer Kühlung der Gasturbine 6 auch bei verschiedenartigen Betriebszuständen gewährleistet ist. Dazu wird die als Kühlmittel für die Gasturbine 6 vorgesehene Luft L durch Wärmetausch mit dem im von der Dampfturbine 21 unabhängigen Wasser-Dampf-Kreislauf 76 geführten Medium M gekühlt. Das beim Wärmetausch mit der Luft L im Wärmetauscher 74 mindestens teilweise verdampfte Medium M wird der Dampftrommel 80 zugeführt, wo der erzeugte Dampf vom unverdampften Medium M getrennt wird. Im Normalbetrieb der Gas- und Dampfturbinenanlage 1, also beim gemeinschaftlichen Betrieb der Gasturbine 6 und der Dampfturbine 21, wird der in der Dampftrommel 80 abgetrennte Dampf D bei geöffnetem Ventil 90 über die Dampfleitung 92 in die Dampftrommel 56 eingespeist. Die der Luft L bei ihrer Kühlung im Wärmetauscher 74 entzogene Wärme wird somit in den Wasser-Dampf-Kreislauf 20 der Dampfturbine 21 eingespeist und der Energieerzeugung zugeführt. Die Gas- und Dampfturbinenanlage 1 arbeitet somit mit besonders hohem Wirkungsgrad.

Der durch die Einspeisung des Dampfs D in den Wasser-Dampf-Kreislauf 20 der Dampfturbine 21 auftretende Verlust an Medium M im separaten Wasser-Dampf-Kreislauf 76 wird durch Einspeisung von Speisewasser in die Dampftrommel 80 über die Leitung 96 bei bedarfsweise geöffnetem Regelventil 94 ausgeglichen. Somit ist ein zuverlässiger und dauerhafter Betrieb des separaten Wasser-Dampf-Kreislaufs 76 gewährleistet.

Die Gas- und Dampfturbinenanlage 1 ist aber auch im Solobetrieb der Gasturbinenanlage 2, also beim Betrieb der Gasturbine 6 bei abgeschalteter Dampfturbine 21, mit sicherer Kühlung der Gasturbine 6 betreibbar. Dazu sind beim Solobetrieb der Gasturbinenanlage 2 das Ventil 90 und das Regelventil 94 geschlossen, so daß der separate Wasser-Dampf-Kreislauf 76 vollständig vom Wasser-Dampf-Kreislauf 20 der Dampfturbine 21 getrennt ist. Die Kühlung der Gasturbine 6 ist somit auch bei völligem Stillstand der Dampfturbine 21 und der ihrem Wasser-Dampf-Kreislauf 20 zugeordneten Komponenten gewährleistet. In diesem Betriebszustand wird die der Luft L bei ihrer Kühlung entzogene Wärme über den Sekundärkühlkreislauf 102 an die Umgebung abgegeben. Der im Wärmetauscher 74 erzeugte Dampf wird dabei in der Dampftrommel 80 an ihrem integrierten Kondensator kondensiert.

Um eine Anpassung des Temperaturniveaus des im separaten Wasser-Dampf-Kreislauf 76 zirkulierenden Mediums M an variierende Erfordernisse bei der Kühlung der Luft L zu ermöglichen, ist eine weitere Verbindungsleitung 106 zwischen dem Wasser-Dampf-Kreislauf 20 der Dampfturbine 21 und dem separaten Wasser-Dampf-Kreislauf 76 vorgesehen. Die Verbindungsleitung 106 zweigt in Strömungsrichtung des Mediums gesehen nach dem Kondensator 40 vom Wasser-Dampf-Kreislauf 20 der Dampfturbine 21 ab und mündet in einem in die Kondensatleitung 82 geschalteten Injektor 108. Über den Injektor 108 ist kaltes Kondensat bedarfsweise in den separaten Wasser-Dampf-Kreislauf 76 injizierbar. Durch Injektion des kalten Kondensats kann dabei die Temperatur des im separaten Wasser-Dampf-Kreislauf 76 umlaufenden Mediums M variiert und an spezifische Erfordernisse beim Wärmetausch mit der Luft L angepaßt werden.

## Patentansprüche

1. Gas- und Dampfturbinenanlage (1) mit einem einer Gasturbine (6) rauchgasseitig nachgeschalteten Abhitzedampferzeuger (4), dessen Heizflächen in den Wasser-Dampf-Kreislauf (20) einer Dampfturbine (21) geschaltet sind, wobei ein zur Kühlung des Kühlmittels der Gasturbine (6) vorgesehener Wärmetauscher (74) sekundärseitig in einen mit dem Wasser-Dampf-Kreislauf (20) der Dampfturbine (21) absperrbar verbundenen separaten Wasser-Dampf-Kreislauf (76) geschaltet ist.

2. Gas- und Dampfturbinenanlage (1) nach Anspruch 1, bei der der Wärmetauscher (74) als Verdampfer für den separaten Wasser-Dampf-Kreislauf (76) ausgebildet ist.

3. Gas- und Dampfturbinenanlage (1) nach Anspruch 1 oder 2, in deren separaten Wasser-Dampf-Kreislauf (76) eine Dampftrommel (80) geschaltet ist.

4. Gas- und Dampfturbinenanlage (1) nach Anspruch 3, bei der die in den separaten Wasser-Dampf-Kreislauf (76) geschaltete Dampftrommel (80) einen integrierten Kondensator aufweist.

5. Gas- und Dampfturbinenanlage (1) nach einem der Ansprüche 1 bis 4, bei der im separaten Wasser-Dampf-Kreislauf (76) erzeugter Dampf über eine absperrbare Dampfleitung (92) in eine in den Wasser-Dampf-Kreislauf (20) der Dampfturbine (21) geschaltete Dampftrommel (56, 60) einspeisbar ist.

6. Gas- und Dampfturbinenanlage (1) nach einem der Ansprüche 1 bis 5, deren separater Wasser-Dampf-Kreislauf (76) im Naturumlauf betreibbar ist.

7. Gas- und Dampfturbinenanlage (1) nach einem der Ansprüche 3 bis 6, wobei die in den separaten Wasser-Dampf-Kreislauf (76) geschaltete Dampftrommel (80) an einen Sekundärkühlkreislauf (102) angeschlossen ist.

8. Verfahren zur Kühlung des Kühlmittels einer Gasturbine (6) einer Gas- und Dampfturbinenanlage (1), bei dem das Kühlmittel durch Wärmetausch mit einem in einem von der Dampfturbine (21) unabhängigen Wasser-Dampf-Kreislauf (76) geführten Medium (M) gekühlt wird.

9. Verfahren nach Anspruch 8, bei dem das im unabhängigen Wasser-Dampf-Kreislauf (76) geführte Medium (M) beim Wärmetausch mit dem Kühlmittel mindestens teilweise verdampft wird.

10. Verfahren nach Anspruch 8 oder 9, bei dem der unabhängige Wasser-Dampf-Kreislauf (76) im Naturumlauf betrieben wird.

## Claims

1. Gas and steam turbine plant (1), with a waste-heat steam generator (4) which follows a gas turbine (6) on the flue-gas side and the heating surfaces of which are connected into the water/steam circuit (20) of a steam turbine (21), a heat exchanger (74) provided for cooling the coolant of the gas turbine (6) being connected on the secondary side into a separate water/steam circuit (76) connected to the water/steam circuit (20) of the steam turbine (21) so as to be capable of being shut off.

2. Gas and steam turbine plant (1) according to Claim 1, in which the heat exchanger (74) is designed as an evaporator for the separate water/steam circuit (76).

3. Gas and steam turbine plant (1) according to Claim 1 or 2, into the separate water/steam circuit (76) of which is connected a steam drum (80).

4. Gas and steam plant (1) according to Claim 3, in which the steam drum (80) connected into the separate water/steam circuit (76) has an integrated condenser.

5. Gas and steam turbine plant (1) according to one of Claims 1 to 4, in which steam generated in the separate water/steam circuit (76) can be fed, via a steam line (92) capable of being shut off, into a steam drum (56, 60) connected into the water/steam circuit (20) of the steam turbine (21).

6. Gas and steam turbine plant (1) according to one of Claims 1 to 5, the separate water/steam circuit (76) of which can be operated by natural circulation.

7. Gas and steam turbine plant (1) according to one of Claims 3 to 6, the steam drum (80) connected into the separate water/steam circuit (76) being connected to a secondary cooling circuit (102).

8. Method for cooling the coolant of a gas turbine (6) of a gas and steam turbine plant (1), in which the coolant is cooled by heat exchange with a medium (M) carried in a water/steam circuit (76) independent of the steam turbine (21).

9. Method according to Claim 8, in which the medium (M) carried in the independent water/steam circuit (76) is at least partially evaporated during heat exchange with the coolant.

10. Method according to Claim 8 or 9, in which the independent water/steam circuit (76) is operated by natural circulation.

## Revendications

1. Installation (1) à turbine à gaz et à turbine à vapeur, comprenant un générateur (4) de vapeur par récupération de la chaleur perdue, qui est monté en aval du côté du gaz d'échappement dune turbine (6) à gaz et dont les surfaces de chauffe sont montées dans le circuit (20) eau-vapeur dune turbine (21) à vapeur, un échangeur de chaleur destiné à refroidir le fluide de refroidissement de la turbine (1) à gaz étant monté du côté secondaire dans un circuit (76) eau-vapeur distinct communiquant avec possibilité d'interruption avec le circuit (20) eau-vapeur de la turbine (21) à vapeur.

2. Installation (1) à turbine à gaz et à vapeur suivant la revendication 1, dans laquelle l'échangeur de chaleur (74) est constitué sous la forme d'un évaporateur pour le circuit (76) distinct eau-vapeur.

3. Installation (1) à turbine à gaz et à vapeur suivant la revendication 1 ou 2, dans le circuit (76) distinct eau-vapeur de laquelle est monté un ballon (80) à vapeur.

4. Installation (1) à turbine à gaz et à vapeur suivant la revendication 3, dans laquelle le ballon (80) à vapeur monté dans le circuit (76) distinct eau-vapeur a un condensateur intégré.

5. Installation (1) à turbine à gaz et à vapeur suivant l'une des revendications 1 à 4, dans laquelle de la vapeur produite dans le circuit (76) distinct eau-vapeur peut être envoyée par un conduit (92) pour la vapeur, qui peut être fermé, dans un ballon (56, 60) à vapeur monté dans le circuit (20) eau-vapeur de la turbine (21) à vapeur.

6. Installation (1) à turbine à gaz et à vapeur suivant Tune des revendications 1 à 5, dont le circuit (76) distinct eau-vapeur peut fonctionner en circulation naturelle.

7. Installation (1) à turbine à gaz et à vapeur suivant Tune des revendications 3 à 6, dans laquelle le ballon (80) à vapeur, monté dans le circuit (76) distinct eau-vapeur, est raccordé à un circuit (102) secondaire de refroidissement.

8. Procédé de refroidissement du fluide de refroidissement d'une turbine (6) à gaz dune installation (1) à turbine à gaz et à turbine à vapeur, dans lequel on refroidit le fluide de refroidissement par échange de chaleur avec un fluide (M) passant dans un circuit (76) eau-vapeur indépendant de la turbine (21) à vapeur.

9. Procédé suivant la revendication 8, dans lequel on évapore au moins partiellement le fluide (M) passant dans le circuit (76) indépendant eau-vapeur lors de l'échange de chaleur avec le fluide de refroidissement.

10. Procédé suivant la revendication 8 ou 9, dans lequel on fait fonctionner en circulation naturelle le circuit (76) eau-vapeur qui est indépendant.
